# EUROPÄISCHE PATENTSCHRIFT

(11) **EP 2 662 928 B1**
(45) Veröffentlichungstag und Bekanntmachung des Hinweises auf die Patenterteilung: **15.08.2018**
(21) Anmeldenummer: 13166682.8
(22) Anmeldetag: 06.05.2013
(51) Int. Cl.: H01Q 1/28, H01Q 3/22, H01Q 3/30, H01Q 21/00, H01Q 21/06, H01Q 21/22

(54) **Antennenvorrichtung und Verfahren zum elektronischen Schwenken eines Radarstrahls**
Antenna device and method for the electronic panning of a radar beam
Dispositif d'antenne et procédé de pivotement électronique d'un faisceau radar

(30) Priorität: 08.05.2012 DE 102012104037
(43) Veröffentlichungstag der Anmeldung: 13.11.2013
(73) Patentinhaber: Airbus Defence and Space GmbH, 85521 Ottobrunn (DE)
(72) Erfinder: Ziegler, Volker, 85662 Hohenbrungg (DE); Schulte, Benedikt, 85579 Neubiberg (DE)
(74) Vertreter: Kastel, Stefan

(56) Entgegenhaltungen:
- WO-A1-00/51202
- US-A- 3 438 035
- US-A- 3 646 559
- US-A- 5 239 301
- US-A1- 2012 033 761

## Beschreibung

Die Anmeldung betrifft eine Antennenvorrichtung für einen Radarsensor, die eine Vielzahl von Einzelantenneneinrichtungen aufweist, die zur Erzeugung und/oder zum Empfang eines Radarstrahls in einem vorbestimmten Sende- und/oder Empfangswinkel durch Interferenz zusammenwirken. Die Einzelantenneneinrichtungen werden mit einem Radarsignal beaufschlagt, und sind so angeordnet, dass ein erster Sende- und/oder Empfangswinkel des Radarstrahls durch eine analoge Strahlformung in Form einer Frequenz des Radarsignals bestimmbar ist. Des Weiteren betrifft die Anmeldung ein Verfahren zum elektronischen Schwenken eines Radarstrahls, wobei der Radarstrahl elektronisch schwenkbar ist und durch Interferenz von Radarsignalen, die von mehreren Einzelantennen abgegeben werden, erzeugt wird. Die Einzelantenneneinrichtungen werden aus einer Speisungseinrichtung mittels Zuleitungen mit einem Speisungssignal versorgt, wobei eine analoge Strahlformung zum Verschwenken des Radarstrahls in einer ersten Schwenkebene verwendet wird. Die Anmeldung betrifft darüber hinaus einen Radarsensor mit einer derartigen Antennenvorrichtung, mit der ein derartiges Verfahren ausführbar ist, sowie ein Luftfahrzeug mit einem derartigen Radarsensor.

Antennenvorrichtungen der eingangs genannten Art werden als Radarsensoren in Radareinrichtungen dafür eingesetzt, Oberflächenstrukturen fester oder flüssiger Materialien zu erkennen. Dieser Anwendungsfall ist insbesondere für den Einsatz als Hindernisradar in Luftfahrzeugen interessant. Die hochfrequenten elektromagnetischen Wellen, die gewöhnlich als Radarwellen bezeichnet werden, werden dafür mittels Interferenz und mittels Strahlformung durch die Form der sie abstrahlenden Antennen derart gebündelt, dass ihre Ausbreitung auf einen vergleichsweise kleinen Raumwinkel beschränkt ist. Es wird in gewissem Sinne ein Radarstrahl erzeugt, mit dem Objekte abtastbar sind.

Ebenso können von den Antennenvorrichtungen empfangene Radarsignale so verknüpft werden, dass mittels der Phasenverschiebung der empfangenen Radarsignale die Signale herausgefiltert werden können, deren Ausbreitungsrichtung einen bestimmten Winkel zu der Antennenvorrichtung aufweist. Dieser Winkel, auf den der Empfang beschränkt wird, wird als Empfangskeule bezeichnet.

Um mit einem Radarsensor ein dreidimensionales Bild zur Erkennung von Hindernissen zu erzeugen, kann die Antenne des Sensors entweder mechanisch in zwei Dimensionen, also horizontal und vertikal, bewegt werden oder der Radarstrahl kann elektronisch geschwenkt werden.

Bekannte bildgebende Hindernisradare, wie sie beispielsweise von der Firma Honeywell vertrieben werden, sind aufgrund des Einsatzes niedrigerer Frequenzen in ihrer Bildauflösung beschränkt und geometrisch vergleichsweise groß, da insbesondere die verwendeten Antenneneinrichtungen aufgrund der Wellenlänge der verwendeten Radarwellen eine große räumliche Ausdehnung aufweisen. Radarsysteme, die zum Erreichen einer höheren Bildauflösung höhere Frequenzbereiche nutzen (z.B. Sandblaster von Rockwell Collins) weisen mechanisch geschwenkte Antennen auf, die ebenfalls einen großen Raumbedarf haben.

Aus US 3438035 A ist eine Radarantenne, die eine Vielzahl in einem Raster angeordneter Antennenelemente aufweist, bekannt. Ein von dieser Radarantenne abgegebener Radarstrahl ist in der Elevation mittels Einstellung einer Frequenz schwenkbar.

In US 5239301 A wird vorgeschlagen, für die Schwenkung in Azimuthrichtung eine Kombination aus Frequenzansteuerung und Phasenschiebern sowie für die Schwenkung in der Elevation eine Ansteuerung mittels Phasenschiebern zu verwenden.

US 3646559 A offenbart eine Radarantenne, bei der zwei unabhängig voneinander funktionierende Modi, namentlich ein frequenzgesteuerter Modus und ein phasengesteuerter Modus, für die Schwenkung des Radarstrahls unabhängig voneinander eingesetzt werden können. Besonderes Augenmerk ist dabei darauf gelegt, dass die Wechselwirkungen zwischen den beiden Modi so weit wie möglich reduziert werden. Ein Bestandteil davon ist es, für die beiden Modi unterschiedliche Frequenzbereiche zu verwenden.

Aus WO 00/51202 A1 ist es bekannt, für die Satellitenkommunikation eine strahlformende Antenne einzusetzen. Um die Kommunikation mit mehreren Satelliten übergangslos aufrechterhalten zu können, auch wenn sich einer der Satelliten aus dem sichtbaren Bereich herausbewegt, ist eine zweite, in derselben Art aufgebaute Antenne vorgesehen.

Mit der Erfindung soll ein Radarsensor geschaffen werden, dessen Einsetzbarkeit in Luftfahrzeugen verbessert ist.

Zur Lösung dieser Aufgabe werden eine Antennenvorrichtung gemäß Patentanspruch 1 sowie ein Verfahren gemäß Patentanspruch 5 vorgeschlagen.

Vorteilhafte Ausgestaltungen der Erfindung sind Gegenstand der Unteransprüche.

Die Antennenvorrichtung gemäß Patentanspruch 1 hat den Vorteil, dass die analoge Strahlformung durch Änderung der Frequenz mit bekannten Speisungseinrichtungen für Radarantennen einfach durchführbar ist. Durch die Möglichkeit, einen Radarstrahl in einer ersten Richtung durch analoge Strahlformung und in einer zweiten Richtung durch digitale Strahlformung zu schwenken, kann auf aufwändige mechanische Einrichtungen zum Schwenken des gesamten Radarsensors verzichtet werden. Geeignete Speisungseinrichtungen können mit im Vergleich zur mechanischen Schwenkung geringem Platzbedarf und geringem Gewicht realisiert werden. Darüber hinaus erlaubt eine solche Antennenvorrichtung auch die Verwendung hoher Frequenzen für den erzeugten Radarstrahl. Speisungseinrichtungen für Radarantennen haben die Möglichkeit, die Frequenz des von ihnen bereitgestellten Radarsignals zügig und präzise zu verändern. Dadurch kann der Sende- und/oder Empfangswinkel mit vergleichweise einfach aufgebauten und bekannten Speisungseinrichtungen effizient verändert werden. Durch die Anordnung der Einzelantenneneinrichtungen in Antennengruppen, wobei eine Mehrzahl von Antennengruppen nebeneinander angeordnet sein kann, ist es insbesondere möglich, ein Feld von Einzelantenneneinrichtungen zu erzeugen, die in einem rechtwinkligen Raster angeordnet sind. In einem solchen rechtwinkligen Raster ist der Effekt von Phasenverschiebungen auf die Richtung des erzeugten Radarstrahls besonders einfach zu bestimmen.

Die Speisungseinrichtung kann durch Zuleitungen mit den Einzelantennen verbunden sein, wobei die Zuleitungen zu den Einzelantennen unterschiedliche Längen aufweisen. Bei hochfrequenten Radarsignalen, wie sie von der Speisungseinrichtung erzeugt werden, beeinflusst eine Laufzeit der Radarsignale in der Zuleitung eine Phasenlage der Radarsignale am Ende der Zuleitung, also bei den Einzelantennen. Somit bietet die Verwendung von Zuleitungen unterschiedlicher Länge eine einfache Möglichkeit, eine Phasenverschiebung zwischen verschiedenen Radarsignalen zu erzeugen.

Für jede Antennengruppe kann eine einzelne Zuleitung zur Verbindung mit der Speisungseinrichtung vorgesehen sein, wobei die Speisungseinrichtung zur Bereitstellung eines separaten Speisungssignals für jede Antennengruppe ausgebildet ist.

Die Speisungseinrichtung zur Speisung der Antennengruppen kann derart ausgebildet sein, dass eine Phasenverschiebung zwischen den Radarsignalen der einzelnen Antennengruppen einstellbar ist.

Das Verfahren gemäß Patentanspruch 5 hat den Vorteil, dass zu seiner Durchführung keine komplexen Geräte notwendig sind, so dass es auch in Vorrichtungen mit geringer Ausdehnung und geringem Gewicht anwendbar ist.

Die zuvor erläuterte Antennenvorrichtung und das zuvor erläuterte Verfahren sind insbesondere dafür verwendbar, einen Radarsensor vorteilhaft aufzubauen. Daher betrifft ein Aspekt der Erfindung ebenfalls einen Radarsensor mit einer erfindungsgemäßen Antenneneinrichtung, mit dem das erfindungsgemäße Verfahren ausführbar ist.

Ein derartiger Radarsensor ist insbesondere zur Verwendung in einem Luftfahrzeug geeignet, so dass ein Aspekt der Erfindung darüber hinaus ein Luftfahrzeug mit einem derartigen Radarsensor betrifft.

Die Erfindung wird nachfolgend anhand der beigefügten Figuren näher erläutert, in denen ein Ausführungsbeispiel der Erfindung schematisch dargestellt ist. Es zeigen im Einzelnen:
- Fig. 1: eine Frontansicht einer Antennenvorrichtung;
- Fig. 2: eine Seitenansicht auf eine Antennengruppe der Antennenvorrichtung;
- Fig. 3: eine Seitenansicht auf eine Antennengruppe der Antennenvorrichtung;
- Fig. 4: eine dreidimensionale Ansicht der Antennenvorrichtung;
- Fig. 5: eine schematische Frontansicht einer Antennengruppe;
- Fig. 6: eine Seitenansicht der Antennengruppe;
- Fig. 7: eine schematische Frontansicht eines Antennenmoduls;
- Fig. 8: eine schematische Draufsicht eines Antennenmoduls;
- Fig. 9: eine schematische Seitenansicht eines Antennenmoduls und
- Fig. 10: ein Schaubild zur Erläuterung des Bildaufbaus einer bildgebenden Radareinrichtung.

Eine Antennenvorrichtung 10 für einen Radarsensor weist einen Rahmen 12 auf, an dem ein Antennenmodul 14 befestigt ist. Das Antennenmodul 14 ist zur Abstrahlung von elektromagnetischen Wellen, insbesondere von hochfrequenten Radarsignalen, ausgebildet. In dem vorliegenden Ausführungsbeispiel ist das Antennenmodul 14 insbesondere zur Abstrahlung von elektromagnetischen Wellen mit einer Frequenz zwischen 76 GHz und 81 GHz verwendbar.

Das Antennenmodul 14 weist eine Vielzahl von Einzelantenneneinrichtungen 16 auf, die in einem ebenen Raster angeordnet sind. Das Raster ist rechtwinklig, wobei eine erste Dimension 90 und eine zweite Dimension 92 des Rasters zueinander senkrecht stehen. Die Einzelantenneneinrichtungen 16 sind entlang der Dimensionen 90, 92 jeweils in Reihen angeordnet. Darüber hinaus sind die Einzelantenneneinrichtungen 16 im Wesentlichen in einer Antennenebene 22 angeordnet, in der die Dimensionen 90, 92 liegen. Einzelantenneneinrichtungen 16, die entlang der Dimension 90 entlang einer Geraden hintereinander liegen, sind jeweils zu einer Antennengruppe 24 zusammengefasst.

Zur Speisung der Einzelantenneneinrichtungen 16 mit einem Radarsignal, das von diesen abgestrahlt werden soll, ist eine Speisungseinrichtung 18 vorgesehen, die durch Zuleitungen 20 mit dem Antennenmodul 14 verbunden ist. Das Antennenmodul 14 weist ein nicht gezeigtes Verteilnetzwerk auf, mit dem die Radarsignale an die Einzelantenneneinrichtungen 16 verteilt werden.

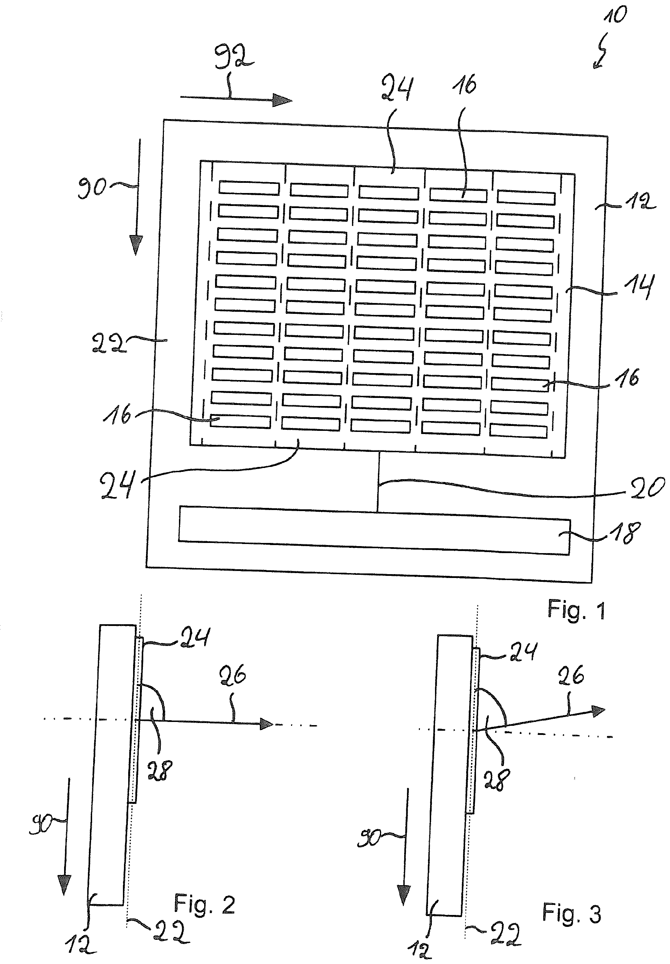

Fig. 2 zeigt eine Seitenansicht einer der Antennengruppen 24. Das Radarsignal, mit dem die Einzelantenneneinrichtungen 16 der Antennengruppe 24 gespeist werden, weist bei seiner Ankunft an den Einzelantenneneinrichtungen 16 jeweils eine Phasenlage auf. Durch Interferenz der von den Einzelantenneneinrichtungen 16 abgestrahlten elektromagnetischen Wellen wird ein Bündelungseffekt erzeugt, wodurch sich makroskopisch ein Radarstrahl 26 ergibt, der in einem Sende- und/oder Empfangswinkel 28 zu der Antenneebene 22 abgestrahlt wird. Sofern die Phasenlage für alle Radarsignale, mit denen die Einzelantenneneinrichtungen 16 gespeist werden, identisch ist, beträgt der Winkel 28 90°.

In Fig. 3 ist der Radarstrahl 26 gezeigt, der sich ergibt, wenn die Phasenlage der Einzelantenneneinrichtungen 16 variiert wird. Der Winkel 28 beträgt in diesem Fall weniger als 90°. Durch entsprechende Veränderung der Phasenlage ist es möglich, den Radarstrahl 26 in einem sehr weiten Bereich zu schwenken. Der Winkel 28 kann zwischen 0° und 180° betragen.

Bei einer einzelnen Antennengruppe 24, wie sie in den Fig. 2 und 3 gezeigt ist, kann der Radarstrahl 26 mittels Interferenz nur in einer Ebene geschwenkt werden.

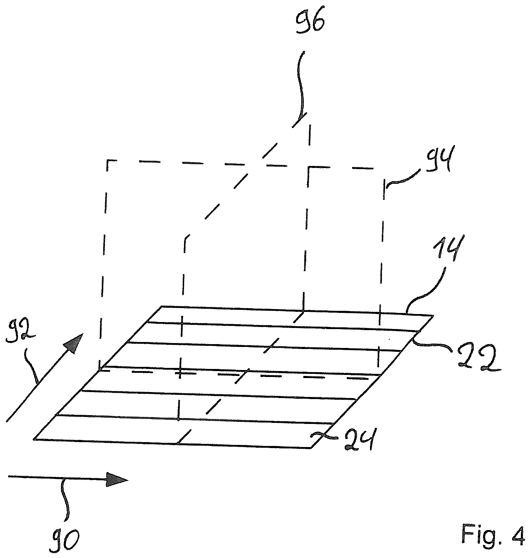

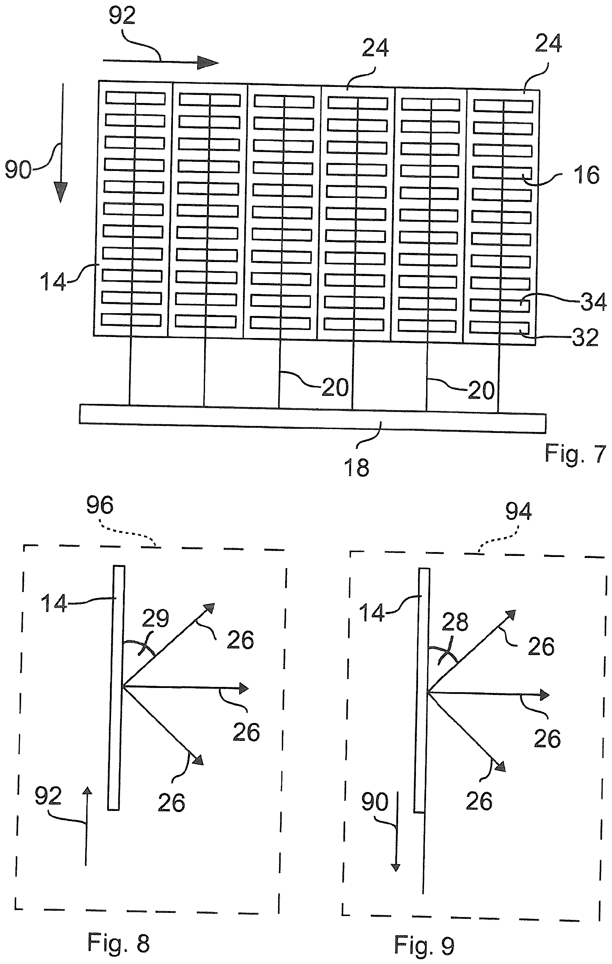

In Fig. 4 sind mehrere Antennengruppen 24 in der zweiten Dimension 92 aneinander anschließend angeordnet und bilden ein Antennenmodul 14. Durch Veränderung der Phasenlage der Einzelantenneneinrichtungen 16 innerhalb einer Antennengruppe 24 ist eine Schwenkung des Radarstrahls 26 in einer ersten Schwenkebene 94 möglich, was einer Änderung des ersten Winkels 28 entspricht. Wird die Phasenlage der Antennengruppen 24 relativ zueinander verändert, so kann wiederum durch Interferenz eine Schwenkung des Radarstrahls 26 in einer zweiten Schwenkebene 96 erreicht werden, was einer Änderung eines zweiten Sende- und/oder Empfangswinkels 29 (siehe Fig. 8 und 9) entspricht.

Durch eine Kombination dieser beiden Vorgehensweisen ist es möglich, den Radarstrahl 26 im Wesentlichen frei zu schwenken, ohne das Antennenmodul mechanisch bewegen zu müssen.

Eine Speisungseinrichtung 18, die für ein so gebildetes Feld aus vielen Einzelantenneneinrichtungen 16 ein eigenes Radarsignal für jede der Einzelantenneneinrichtungen 16 erzeugen muss, ist äußerst aufwändig, da sie eine Vielzahl von Ausgängen umfassen muss, die jeweils ein Radarsignal mit einer sehr präzisen Phasenlage bereitstellen.

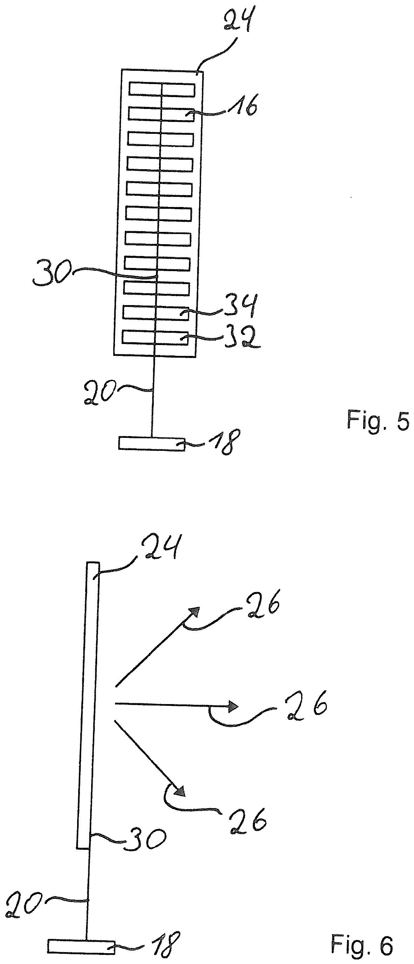

In Fig. 5 ist eine Antennengruppe 24 mit Einzelantenneneinrichtungen 16 sowie einem die Einzelantenneneinrichtungen 16 verbindenden Verteilnetzwerk 30 gezeigt. Die Zuleitung 20 des Verteilnetzwerks ist an die Speisungseinrichtung 18 angeschlossen. Wenn die Speisungseinrichtung 18 nun über die Zuleitung 20 ein Radarsignal einspeist, so wird dieses von der Zuleitung 20 an das Verteilnetzwerk 30 verteilt. Das Radarsignal benötigt eine gewisse Laufzeit, um von der Speisungseinrichtung 18 durch die Zuleitung zu dem Verteilnetzwerk 30 zu gelangen. Ebenso benötigt das Radarsignal eine gewisse Laufzeit, um sich in dem Verteilnetzwerk fortzubewegen. Dadurch erreicht der Beginn des Radarsignals die Einzelantenneneinrichtung 32 zuerst, weil diese der Zuleitung 20 und somit auch der Speisungseinrichtung 18 am nächsten liegt.

Zu dem Zeitpunkt, zu dem der Beginn des Radarsignals die zweitnächste Einzelantenneneinrichtung 34 erreicht, weist das Radarsignal an der ersten Einzelantenneneinrichtung 32 bereits eine andere Phasenlage auf als zu seinem Beginn. Diese Phasenverschiebung von einer Einzelantenneneinrichtung 16, 32, 34 zur nächsten setzt sich für jede der Einzelantenneneinrichtungen 16 fort. Dadurch ergibt sich durch Interferenz in den von den Einzelantenneneinrichtungen 16, 32, 34 abgestrahlten elektromagnetischen Wellen die Möglichkeit, den Radarstrahl 26 zu schwenken.

Die Größe der Phasenverschiebung wird durch die Laufzeit, welche das Radarsignal benötigt, um von einer Einzelantenneneinrichtung 16, 32, 34 zur nächsten zu gelangen, bestimmt. Entspricht die Laufzeit zwischen den Einzelantenneneinrichtungen 16, 32, 34 beispielsweise einem ganzzahligen Vielfachen der Periodendauer des eingespeisten Radarsignals, so ist die Phasenlage der Einzelantenneneinrichtungen 16, 32, 34 identisch und der Radarstrahl 26 wird senkrecht abgestrahlt.

Durch die Veränderung der Frequenz des Radarsignals verändert sich gleichzeitig die Periodendauer des eingespeisten Radarsignals, so dass die Laufzeit zwischen den Einzelantenneneinrichtungen 16, 32, 34 je nach Frequenz einer anderen Phasenverschiebung entspricht. Der Winkel, in dem der Radarstrahl 26 geschwenkt wird, ist lediglich von der Frequenz des eingespeisten Radarsignals abhängig. Der Radarstrahl 26 kann also oben, wie es in Fig. 6 gezeigt ist, geschwenkt werden, indem die Frequenz des eingespeisten Radarsignals verändert wird. Die Speisungseinrichtung 18 muss für eine Schwenkung des Radarstrahls 26 in der ersten Schwenkebene 94 auf diese Art und Weise lediglich die Frequenz des eingespeisten Radarsignals anpassen. Dies stellt eine Art der analogen Strahlformung dar. Die Fähigkeit, die Frequenz des eingespeisten Radarsignals anzupassen, ist bereits heute Bestandteil der meisten Radaranlagen. Zusätzliche komplexe Schaltungen oder Aufbauten sind nicht notwendig.

Eine Anordnung mehrerer Antennengruppen 24 nebeneinander ist in Fig. 7 gezeigt. Jede der Antennengruppen 24 weist eine Zuleitung 20 auf, mit der sie mit einer Speisungseinrichtung 18 verbunden ist. Die Speisungseinrichtung 18 speist die Antennengruppen 24 jeweils mit phasenverschobenen Radarsignalen, so dass der Radarstrahl in der zweiten Schwenkebene 96 geschwenkt wird. Darüber hinaus speist die Speisungseinrichtung 18 die Antennengruppen 24 jeweils mit Radarsignalen einer bestimmten Frequenz, so dass durch den oben beschriebenen Effekt der Radarstrahl in der ersten Schwenkebene 94 abhängig von der Frequenz des Radarsignals geschwenkt wird.

Somit wird die Schwenkung in der ersten Schwenkebene 94 (Fig. 9) durch die eingespeiste Frequenz und die Schwenkung in der zweiten Schwenkebene 96 (Fig. 8) durch die Phasenverschiebung der eingespeisten Radarsignale bestimmt. Dadurch kann der Radarstrahl 26 also vollständig elektronisch geschwenkt werden. Einrichtungen, welche die Antennenvorrichtung 10 oder das Antennenmodul 14 mechanisch drehen, sind nicht mehr notwendig.

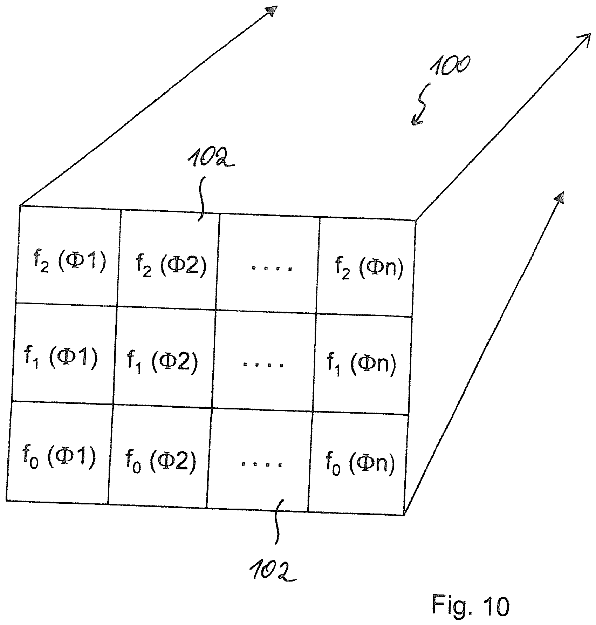

Fig. 10 zeigt eine Anzeigeeinrichtung 100, die Teil eines Hindernisradars ist. Die Anzeigeeinrichtung 100 weist Anzeigeelemente 102 auf, die in einem rechtwinkligen Raster angeordnet sind. Das Hindernisradar verwendet die Antennenvorrichtung 10, um einen Bereich vor der Antennenvorrichtung 10 mit einem Radarstrahl 26 auf Hindernisse abzutasten.

Dazu wird der Radarstrahl 26 in einem gewissen Winkelbereich in den beiden Schwenkebenen 94, 96 geschwenkt und die dabei ermittelten Informationen über Hindernisse in den Anzeigeelementen 102 dargestellt.

Jeweils einer Zeile der Anzeigeelemente 102 ist eine Frequenz der Speisungseinrichtung 18 zugeordnet und jeweils einer Spalte der Anzeigeelemente 102 ist eine Phasenverschiebung zwischen den Antennengruppen 24 zugeordnet. Um ein vollständiges Bild für die Anzeigeeinrichtung 100 zu erhalten, erzeugt die Speisungseinrichtung 18 für jedes Anzeigeelement 102 die ihm zugeordnete Kombination aus Frequenz und Phasenverschiebung.

Jedes der Anzeigeelemente 102 kann Informationen auf unterschiedliche Weise darstellen, beispielsweise durch Farbgebung, Intensität oder Helligkeit.

Das Hindernisradar kann beispielsweise einen Abstand zu einem Hindernis ermitteln. Je näher das Hindernis ist, desto heller wird das Anzeigeelement 102. Somit ergibt sich, ähnlich wie ein Kamerabild im sichtbaren Bereich, eine Entfernungskarte für Hindernisse im Sichtbereich des Hindernisradars.

Ebenso ist es denkbar, dass jedes der Anzeigeelemente 102 Piktogramme oder Text darstellen kann.

Die Antennenvorrichtung 10 ist breitbandig, das heißt in einem großen Frequenzband, in diesem Ausführungsbeispiel 76 GHz bis 81 GHz, verwendbar. Allerdings wird von der Speisungseinrichtung 18 lediglich ein schmalbandigen Radarsignal erzeugt.

Eine Aperturbelegung ist weiterhin möglich. Die abstrahlenden Elemente, also die Einzelantenneneinrichtungen 16, 32, 34, können dadurch so variiert werden, dass sie unterschiedlich große Leistungen abstrahlen. Durch die Aperturbelegung ist eine Strahlformung in einer Raumrichtung möglich, die für praktische Anwendungen benötigt wird. Eine Strahlformung kann darüber hinaus bedeuten, dass die Breite des Radarstrahls 26 (Abstrahlungskeule) beeinflusst werden kann und dass die Abstrahlung in andere Richtungen unterdrückt wird. Damit eine Strahlformung möglich ist, darf der Abstand der Einzelantenneneinrichtungen 16, 32, 34 nicht zu groß werden. Der maximale Abstand hängt unter anderem von der Frequenz des verwendeten Radarsignals ab.

In dem vorliegenden Ausführungsbeispiel sind die Einzelantenneneinrichtungen 16, 32, 34 planar sowie in einer Ebene angeordnet. Eine Einzelantenneneinrichtung 16, 32, 34 weist ein Substrat mit einer Metallisierung auf dem Substrat sowie eine komplett metallisierte Fläche unter dem Substrat auf. Das Substrat selbst befindet sich zwischen den Metallschichten.

Der Einsatz von mehrlagigen Substraten kann ebenfalls sinnvoll sein. So ist es möglich, eine obere Lage mit einer niedrigen Dielektrizitätszahl für die Antennen auszugestalten. Ebenso ist es möglich, eine untere Lage mit einer hohen Dielektrizitätszahl vorzusehen, die eine große Laufzeitveränderung in Abhängigkeit der Frequenz bewirkt und somit die Möglichkeit der Verschwenkung verbessert.

Die digitale Strahlformung kann beim Senden so bewirkt werden, dass die Phasenverschiebung digital erzeugt wird und dann über gleich lange Leitungen zu den Antennen übertragen wird. Eine Empfangssignal kann über die gleich lange Leitungen übertragen und anschließend Analog/Digitalkonvertiert werden. Danach kann es dann digital bearbeitet werden und so eine virtuelle Strahlsteuerung der Empfangskeule erreicht werden.

In dem vorliegenden Ausführungsbeispiel sind die Abstände zwischen den Einzelantenneneinrichtungen 16, 32, 34 jeweils in einer Dimension 90, 92 identisch. Die Abstände der Einzelantenneneinrichtungen 16, 32, 34 können allerdings variiert werden, ohne dass dies Auswirkungen auf die Fähigkeit hätte, den Radarstrahl 26 elektronisch zu schwenken. Die Geometrie der Anordnung der Einzelantenneneinrichtungen 16, 32, 34 ist lediglich bei der Auswahl der zu verwendenden Frequenzen zu berücksichtigen.

Diverse Faktoren, beispielsweise beim Aufbau einer Leitung verwendete Dielektrika, können eine Ausbreitungsgeschwindigkeit von Hochfrequenzsignalen in Leitern beeinflussen. Wenn die Ausbreitungsgeschwindigkeit durch derartige Faktoren verringert wird, dann wird die Leitung scheinbar länger. Diese scheinbare Länge wird auch als elektrische Länge bezeichnet. Die frequenzgesteuerte analoge Strahlformung kann, wie oben beschrieben, durch unterschiedliche physische Leitungslängen, aber auch durch unterschiedliche elektrische Leitungslängen bewirkt werden. Sofern die Faktoren, welche die unterschiedliche elektrische Leitungslänge bewirken, veränderbar sind, kann die analoge Strahlformung während der Benutzung der Antennenvorrichtung 10 beeinflusst werden. Dadurch können beispielsweise die zum Abtasten verwendeten Frequenzen variiert werden.

In dem Ausführungsbeispiel sind die Einzelantenneneinrichtungen 16 so dargestellt, dass sie alle gleich groß sind und die gleiche räumliche Orientierung aufweisen. Für verschiedene Anwendungsfälle kann es allerdings wünschenswert sein, dass die Einzelantenneneinrichtungen 16 unterschiedliche Größen und/oder eine unterschiedliche räumliche Orientierung aufweisen. Durch derartige Variationen der Größe und/oder der räumlichen Orientierung ist es möglich, das abgestrahlte Radarsignal zu polarisieren oder eine erweiterte Breitbandigkeit der Antenne zu erreichen.

Ebenso ist es möglich, die Einzelantenneneinrichtungen 16 statt entlang von Geraden, wie in dem Ausführungsbeispiel gezeigt, entlang anderer Kurven anzuordnen. Die Einzelantenneneinrichtungen 16 können auch zueinander versetzt angeordnet sein. Die Dimensionen 90,92 stehen folglich nicht zwingend senkrecht aufeinander.

Durch die genannten Abwandlungen ist es möglich, dass der von den Einzelantenneneinrichtungen 16, 32, 34 abgestrahlte Radarstrahl 26 in einem anderen Winkel 28 als 90° abgestrahlt wird, wenn die Phasenlage für alle Radarsignale, mit denen die Einzelantenneneinrichtungen 16 gespeist werden, identisch ist.

Die analoge Strahlformung wird in dem Ausführungsbeispiel dadurch bewirkt, dass die Zuleitungen 20 zu den Einzelantenneneinrichtungen 16 jeweils unterschiedliche Längen aufweisen. Dadurch, dass, wie gezeigt, die Einzelantenneneinrichtungen 16 jeweils hintereinander an der Zuleitung 20 beziehungsweise dem Verteilnetzwerk 30 angeschlossen sind, muss die Speisungseinrichtung 18 für jede Antennengruppe 24 nur ein Speisungssignal bereitstellen. Die analoge Strahlformung wird danach durch das Verteilnetzwerk 30 durchgeführt.

Ebenso ist es denkbar, für jede der Einzelantenneneinrichtungen 16 oder für beliebige Gruppen von Einzelantenneneinrichtungen 16 jeweils ein eigenes Speisungssignal bereitzustellen. Die Phasenverschiebung, welche analog erzeugt wird, kann in diesem Fall durch die Speisungseinrichtung 18 durchgeführt werden. Zu diesem Zweck könnten beispielsweise die Leitungslängen der Zuleitungen 20 innerhalb der Speisungseinrichtung 18 physisch und/oder elektrisch veränderbar ausgestaltet werden. Es ist ebenfalls möglich, die Speisungssignale mittels direkter digitaler Synthese (direct digital synthesis) zu erzeugen.

Mechanisch geschwenkte Antennen sind für die Integration auf fliegenden Plattformen nur bedingt geeignet. Die elektrische Strahlschwenkung in zwei Dimensionen ist im höheren Frequenzbereich aufgrund geometrischer und technologischer Beschränkungen nur eingeschränkt möglich und meistens mit hohen Gesamtkosten des Systems verbunden.

Alle bestehenden Systeme sind aufgrund ihrer Architektur relativ kostenintensiv und schwierig auf einer fliegenden Plattform zu integrieren.

Die zweidimensionale elektrische Strahlschwenkung wird erfindungsgemäß durch den schmalbandigen Einsatz eines breitbandigen Radarsystems bei unterschiedlichen Frequenzen erzielt. In einer ersten Raumrichtung (zum Beispiel horizontal) wird der Strahl entweder mit analoger oder digitaler Strahlschwenkung herkömmlich elektronisch gesteuert. In einer zweiten Raumrichtung (zum Beispiel vertikal) bewirken besondere planare Antennen- und Versorgungsstrukturen, dass der Antennenstrahl beim Betrieb des Radarsystems bei unterschiedlichen Frequenzen in verschiedene Richtungen geschwenkt wird.

Aufgrund der beschriebenen Lösung wird es möglich, einen hochauflösenden 3-D bildgebenden Radarsensor herzustellen, der kostengünstig ist, geometrisch nahezu planar ist und eine elektronische Strahlschwenkung in zwei Raumrichtungen ermöglicht.

### Bezugszeichenliste

- 10: Antennenvorrichtung
- 12: Rahmen
- 14: Antennenmodul
- 16: Einzelantenneneinrichtung
- 18: Speisungseinrichtung
- 20: Zuleitung
- 22: Antennenebene
- 24: Antennengruppe
- 26: Radarstrahl
- 28: erster Sende- und/oder Empfangswinkel
- 29: zweiter Sende- und/oder Empfangswinkel
- 30: Verteilnetzwerk
- 32: Einzelantenneneinrichtung
- 34: Einzelantenneneinrichtung

- 90: erste Dimension
- 92: zweite Dimension
- 94: erste Schwenkebene
- 96: zweite Schwenkebene

- 100: Anzeigeeinrichtung
- 102: Anzeigeelement

## Patentansprüche

1. Antennenvorrichtung (10) für einen Radarsensor,
mit einer Vielzahl von Einzelantenneneinrichtungen (16), die zur Erzeugung und/oder zum Empfang eines Radarstrahls (26) in einem vorbestimmten Sende- und/oder Empfangswinkel durch Interferenz zusammenwirken,
wobei die Einzelantenneneinrichtungen (16) mit einem Radarsignal beaufschlagt werden, und
wobei die Einzelantenneneinrichtungen (16) so angeordnet sind, dass ein erster Sende- und/oder Empfangswinkel (28) des Radarstrahls (26) durch eine analoge Strahlformung bestimmt ist und
der erste Sende- und/oder Empfangswinkel (28) durch eine Frequenz des Radarsignals bestimmbar ist, wobei ein zweiter Sende- und/oder Empfangswinkel (29) des Radarstrahls (26) durch eine digitale Strahlformung bestimmt ist,
wobei die Einzelantenneneinrichtungen (16) als Antennengruppen (24) gruppiert sind,
wobei eine Mehrzahl von Antennengruppen (24) nebeneinander angeordnet ist,
wobei eine Speisungseinrichtung (18) zur Erzeugung und Einspeisung des Radarsignals vorgesehen ist,
wobei die Speisungseinrichtung (18) zur Erzeugung von Speisungssignalen zur Durchführung einer analogen Strahlformung in einer ersten Schwenkebene (94) mittels Speisung der Antennengruppen (24) jeweils mit Radarsignalen einer bestimmten Frequenz und zur Durchführung einer digitalen Strahlformung in einer zweiten Schwenkebene (96) mittels Speisung der Antennengruppen (24) jeweils mit phasenverschobenen Radarsignalen ausgebildet ist,
wobei die Speisungseinrichtung (18) derart ausgebildet ist, dass bei einer Veränderung der Phasenlage der Einzelantenneneinrichtungen (16) innerhalb einer Antennengruppe (24) der Radarstrahl (26) in der ersten Schwenkebene (94) schwenkbar ist, so dass ein erster Sende- und/oder Empfangswinkel (28) veränderbar ist, und dass bei einer Änderung der Phasenlage der Antennengruppen (24) relativ zueinander der Radarstrahl (26) in der zweiten Schwenkebene (96) schwenkbar ist, so dass der zweite Sende- und/oder Empfangswinkel (29) änderbar ist,
wobei die Speiseeinrichtung (18) derart ausgebildet ist, dass bei einer Veränderung der Frequenz des eingespeisten Radarsignals der Radarstrahl (26) in der ersten Schwenkebene (28) schwenkbar ist.

2. Antennenvorrichtung nach Anspruch 1, **dadurch gekennzeichnet, dass** die Speisungseinrichtung (18) durch Zuleitungen (20) mit den Einzelantennen (16) verbunden ist, wobei die Zuleitungen (20) zu den Einzelantennen (16) unterschiedliche elektrische Längen aufweisen.

3. Antennenvorrichtung nach einem der voranstehenden Ansprüche, **dadurch gekennzeichnet, dass** für jede Antennengruppe (24) eine einzelne Zuleitung (20) zur Verbindung mit der Speisungseinrichtung (18) vorgesehen ist, wobei die Speisungseinrichtung (18) zur Bereitstellung eines separaten Speisungssignals für jede Antennengruppe (24) ausgebildet ist.

4. Antennenvorrichtung nach Anspruch 3, **dadurch gekennzeichnet, dass** die Speisungseinrichtung (18) zur Speisung der Antennengruppen (24) derart ausgebildet ist, dass eine Phasenverschiebung zwischen den Radarsignalen der einzelnen Antennengruppen (24) einstellbar ist.

5. Verfahren zur Erzeugung eines Radarstrahls (26), wobei der Radarstrahl (26) elektronisch schwenkbar ist und durch Interferenz von Radarwellen, die von mehreren Einzelantenneneinrichtungen (16) abgegeben werden, erzeugt wird und wobei die Einzelantenneneinrichtungen (16) aus einer Speisungseinrichtung (18) mittels Zuleitungen (20) mit einem Speisungssignal versorgt werden, mit den Schritten:
a) Verwendung einer analogen Strahlformung zum Verschwenken des Radarstrahls (26) in einer ersten Schwenkebene (94), Veränderung einer Frequenz des Speisungssignals zur analogen Strahlformung,
b) Verwendung mehrerer Antennengruppen (24), die jeweils eine Mehrzahl von Einzelantenneneinrichtungen (16) aufweisen,
c) Versorgung der Antennengruppen (24) mit einem Speisungssignal, wobei das Speisungssignal der Antennengruppen (24) jeweils eine Phasenverschiebung gegenüber den Speisungssignalen der anderen Antennengruppen (24) derart aufweist, dass der Radarstrahl (26) in einer zweiten Schwenkebene (96) geschwenkt wird, wobei zur Durchführung von Schritt c) eine digitale Strahlformung verwendet wird.

6. Radarsensor mit einer Antennenvorrichtung nach einem der Ansprüche 1 bis 4, mit der ein Verfahren nach Anspruch 5 ausführbar ist.

7. Luftfahrzeug mit einem Radarsensor nach Anspruch 6.

## Claims

1. An antenna apparatus (10) for a radar sensor, having a plurality of individual antenna devices (16) that interact through interference to generate and/or receive a radar beam (26) at a predetermined angle of transmission and/or reception,
wherein the individual antenna devices (16) are provided with a radar signal, and wherein the individual antenna devices (16) are arranged such that a first angle of transmission and/or reception (28) of the radar beam (26) is determined via an analog beam formation and the first angle of transmission and/or reception (28) can be determined via a frequency of the radar signal,
wherein a second angle of transmission and/or reception (29) of the radar beam (26) is determined via a digital beam formation,
wherein the individual antenna devices (16) are grouped as antenna groups (24),
wherein a plurality of antenna groups (24) are arranged next to each other,
wherein a feed device (18) for generating and feeding the radar signal is provided,
wherein the feed device (18) is configured to generate feed signals for performing an analog beam formation in the first pivot plane (94) by means of feeding the respective antenna groups (24) with radar signals of a specific frequency and for performing a digital beam formation in the second pivot plane (96) by means of respectively feeding the antenna groups (24) with phase shifted radar signals,
wherein the feed device (18) is configured such that the radar beam (26), when the phase position of the individual antenna devices (16) within an antenna group (24) is changed, can be pivoted in the first pivot plane (94), so that a first angle of transmission and/or reception (28) can be changed and that the radar beam (26), when the phase position of the antenna groups (24) is changed relative to each other, can be pivoted in the second pivot plane (96), so that the second angle of transmission and/or reception (29) can be changed,
wherein the feed device (18) is configured such that the radar beam (26), when the frequency of the fed radar signal is changed, can be pivoted in the first pivot plane (94).

2. The antenna apparatus as claimed in claim 1, **characterized in that** the feed device (18) is connected to the individual antennas (16) via feed lines (20), wherein the feed lines (20) to the individual antennas (16) have different electrical lengths.

3. The antenna apparatus as claimed in any of the previous claims, **characterized in that** an individual feed line (20) is provided for each antenna group (24) for connecting to the feed device (18), wherein the feed device (18) is configured to provide a separate feed signal for each antenna group (24).

4. The antenna apparatus as claimed in claim 3, **characterized in that** the feed device (18) for supplying the antenna groups (24) is configured such that a phase shift between the radar signals of the individual antenna groups (24) is adjustable.

5. A method for generating a radar beam (26), wherein the radar beam (26) is electronically pivotable and is generated through interference of radar waves that are emitted by a plurality of individual antenna devices (16) and wherein the individual antenna devices (16) are supplied with a feed signal from a feed device (18) by means of feed lines (20), comprising the steps of
a) using an analog beam formation to pivot the radar beam (26) in a first pivot plane (94), wherein a frequency of the feed signal is changed for the analog beam formation,
b) using a plurality of antenna groups (24) that respectively have a plurality of individual antenna devices (16),
c) supplying the antenna groups (24) with a feed signal, wherein the feed signal of the antenna groups (24) respectively has a phase shift relative to the feed signals of the other antenna groups (24) such that the radar beam (26) is pivoted in a second pivot plane (96), wherein a digital beam formation is used to perform step c).

6. A radar sensor having an antenna apparatus as claimed in any of claims 1 to 4, with which a method as claimed in claim 5 can be carried out.

7. An aircraft having a radar sensor as claimed in claim 6.

## Revendications

1. Dispositif d'antenne (10) pour un capteur radar, comprenant une pluralité d'installations d'antennes individuelles (16) coopérant par interférence pour produire un faisceau radar dans un angle de transmission et/ou un angle de réception prédéterminé,
dans lequel un signal radar est appliqué sur les installations d'antennes individuelles (16) et
dans lequel les installations d'antennes individuelles (16) sont disposées de manière qu'un premier angle de transmission et/ou de réception (28) du faisceau radar (26) est déterminé par une formation de faisceau analogue et le premier angle de transmission et/ou de réception (28) est déterminable par une fréquence du signal radar,
dans lequel un deuxième angle de transmission et/ou de réception (29) du faisceau radar (26) est déterminé par une formation de faisceau digitale, dans lequel les installations d'antennes individuelles (16) sont groupées comme des groupes d'antennes (24),
dans lequel une pluralité de groupes d'antennes (24) sont juxtaposées, dans lequel un dispositif d'alimentation (18) pour la génération et l'alimentation du signal radar est prévu,
dans lequel le dispositif d'alimentation (18) pour la génération de signaux d'alimentation est agencé pour la réalisation d'une formation de faisceau analogue dans un premier plan de pivotement (94) par l'alimentation des groupes d'antennes (24) respectives en signaux radar d'une fréquence déterminée et pour la réalisation d'une formation de faisceau digitale dans un deuxième plan de pivotement (96) par l'alimentation des groupes d'antennes (24) respectives en signaux radar décalés,
dans lequel le dispositif d'alimentation (18) est réalisé de manière qu'en cas de changement de la position de phase des installations d'antennes individuelles (16) dans un groupe d'antennes (24) le faisceau radar (26) peut être pivoté dans le premier plan de pivotement (94) tel qu'un premier angle de transmission et/ou de réception (28) peut être modifié, et qu'en cas de changement de la position de phase des groupes d'antennes (24) les uns par rapport aux autres le faisceau radar (26) peut être pivoté dans le deuxième plan de pivotement (96) tel que le deuxième angle de transmission et/ou de réception (29) peut être changé,
le dispositif d'alimentation (18) étant réalisé de manière qu'en cas de changement de la fréquence du signal radar alimenté le faisceau radar (26) peut être pivoté dans le premier plan de pivotement (28).

2. Dispositif d'antenne selon la revendication 1, **caractérisé en ce que** le dispositif d'alimentation (18) est relié aux antennes individuelles (16) par des conducteurs (20), lesdits conducteurs (20) aux antennes individuelles (16) présentant des longueurs électriques différentes.

3. Dispositif d'antenne selon l'une des revendications précédentes, **caractérisé en ce que** pour chaque groupe d'antennes (24) est prévu un conducteur individuel (20) pour la connexion au dispositif d'alimentation (18), ledit dispositif d'alimentation (18) étant conçu pour fournir un signal d'alimentation séparé pour chaque groupe d'antennes (24).

4. Dispositif d'antenne selon la revendication 3, **caractérisé en ce que** le dispositif d'alimentation (18) pour alimenter les groupes d'antennes (24) est réalisé de telle sorte qu'une déphasage entre les signaux radar des groupes d'antennes (24) individuelles soit réglable.

5. Procédé pour générer un faisceau radar (26), dans lequel le faisceau radar (26) peut être pivoté de manière électronique et est généré par l'interférence des ondes radar émises de plusieurs installations d'antennes individuelles (16) et dans lequel les installations d'antennes individuelles (16) sont alimentées par des conducteurs (20) en un signal d'alimentation à partir d'un dispositif d'alimentation (18), le procédé comprenant les étapes suivantes:
a) utilisation d'une formation de faisceau analogue pour le pivotement du faisceau radar (26) dans un premier plan de pivotement (94), variation d'une fréquence du signal d'alimentation pour la formation de faisceau analogue;
b) utilisation de plusieurs groupes d'antennes (24), chacun d'eux comportant une pluralité d'installations d'antennes individuelles (16),
c) alimentation des groupes d'antennes (24) en un signal d'alimentation, le signal d'alimentation des groupes d'antennes (24) présentant respectivement une déphasage par rapport aux signaux d'alimentation des autres groupes d'antennes (24) de sorte que le faisceau radar (26) est pivoté dans un deuxième plan de pivotement (96), en utilisant une formation de faisceau digitale pour l'exécution de l'étape c).

6. Capteur radar avec un dispositif d'antenne selon l'une des revendications 1 à 4, permettant une exécution du procédé selon la revendication 5.

7. Aéronef comprenant un capteur radar selon la revendication 6.
